# EUROPEAN PATENT SPECIFICATION

(11) **EP 2 882 566 B1**
(45) Date of publication and mention of the grant of the patent: **06.07.2016**
(21) Application number: 13828683.6
(22) Date of filing: 18.07.2013
(51) Int. Cl.: B23P 6/00, B23K 26/342, B23K 37/04, C23C 24/08, B23K 26/70, B23K 37/02, B23K 26/08, B23K 26/34, B23K 26/14, B23K 101/00, C23C 24/10

(54) **APPARATUS FOR REPAIR AND RENOVATION OF CRANKSHAFT JOURNAL SURFACES IN-SITU BY MEANS OF LASER CLADDING ; METHOD USING SUCH APPARATUS**
VORRICHTUNG ZUR REPARATUR UND SANIERUNG VON KURBELWELLENZAPFENOBERFLÄCHEN IN-SITU MITTELS LASERPLATTIERUNG ; VERFAHREN VERWENDEND SOLCHE VORRICHTUNG
APPAREIL POUR RÉPARER ET RÉNOVER DES SURFACES DE TOURILLON DE VILEBREQUIN IN SITU AU MOYEN D'UN PLAQUAGE LASER ; METHODE UTILISANT UN TEL APPAREIL

(30) Priority: 07.08.2012 LV 120130
(43) Date of publication of application: 17.06.2015
(73) Proprietor: Torims, Toms, 1011 Riga (LV)
(72) Inventor: Torims, Toms, 1011 Riga (LV)
(74) Representative: Kuzjukevica, Lucija
(86) International application number: PCT/LV2013/000006
(87) International publication number: WO 2014/025244

(56) References cited:
- EP-A1- 0 456 847
- EP-A1- 1 703 187
- CN-A- 101 922 006
- JP-A- H02 111 863
- RU-C1- 2 107 598
- SU-A1- 1 311 911
- US-A- 3 103 088
- US-A- 4 271 346

## Description

The field of invention refers to manufacturing engineering, in particular to shipbuilding and ship repair. Said invention applies to internal combustion engines, such as marine diesel engines.

The invention relates to an apparatus to be used in above described fields, for repair and renovation of the crankshaft journal (bearing) surfaces according to the preamble of claim 1 (see, for example, US 4 271 346 A), and a method using such apparatus (see claim 4), by means of laser build-up (cladding). Invented apparatus and method is designed to perform crankpin journals surfaces build-up (cladding) operations directly in the engine housing, without removing the crankshaft from the engine.

### Background of the invention

Heavy working conditions and intensive wear of the marine diesel engine crankshaft main and crankpin journals surfaces, accompanied with eventual lubrication failures are causing various damages of the journal surfaces. Common faults in the surface of the journals are: ridges, cuts, grooves, tearings, marks and formation of built-up edge. Wear is causing also loss of required geometrical clearances of the crankshaft journals, such as roundness and alignment to the centre.

The above mentioned damages are also affecting mechanical properties of journal surfaces. This results in reduced hardness and stiffness or in contrary excessive surface hardening. Therefore regular repairs of marine diesel engine crankshaft main and crankpin journals surfaces are needed in order to perform partial or complete renovation of the worn-out crankshaft journals. These repairs are done in the workshop, by removing crankshaft from engine and subsequently performing journal grinding on stationary machines. Crankshaft usually is fixed in the centres and rotated around its central axe.

Where it is necessary also various types of build-up operations are carried out in the specialized on-shore workshops. Subsequently crankshaft journal is machined to the required dimensions as per manufacturers' specifications.

Crankshaft journals can be renovated using various technologies, e.g.: conventional TIG/MIG/MAG build-up welding, plasma coating - welding and spraying. These surface refurbishing techniques are approved by certain Ship Classification Societies, yet are limited to use only within workshop (onshore) environments, are time consuming and can be performed only by highly sophisticated machinery. Other manual operations (e.g. metal-plastics, grinding and lapping) can be applied for emergency repairs and only as a temporary solution.

None of these technologies can be used on board the ship to fully build-up crankshaft crankpin journal surfaces. However, frequently crankshaft crankpin repairs have to be done directly on board of the vessel or even at sea and not in the comfortable conditions of on-shore facilities.

Prior efforts have been made to tackle a problem of in situ repair of crankshaft journals. In article *"*Torims T., Gerins E., Ratkus A. Shipboard Crankshaft Bearing In-Situ Repairs Utilizing Laser Build-Up Welding // Annals of DAAAM & Proceedings 2011, Austria, Vienna, 23.-26. November, 2011. - pp 597-598*"* is outlined an idea of laser build-up welding application to the marine engine crankshafts, however, without proposing particular technical solutions.

In article *"*H. Koehler, K. Partes, T. Seefeld, F. Vollertsen. Laser reconditioning of crankshafts: From lab to application. Physics Procedia, Volume 5, Part A, 2010, pp. 387-397*.* " is described a technique of laser build up on crankshaft. Described technique is limited to the workshop conditions and is not in-situ technological solution.

In article *"*I. A. Vishnevetskaya, V. A. Denisov and A. V. Solovyov. Tribotechnical efficiency of journal-bearing connection of crankshaft renewed by laser built-up welding. Proc. SPIE 2713, 301, 1996, pp 301-305*"* is addressed material properties issues and do not give any technical solutions or applications of the laser build-up technology itself.

In-situ crankshaft journal grinder is described in document US No. 2,937,479. Given apparatus refers to an "on-site" journal correctors or reconditioning devices. Document GB No. 869,240 describes a crankshaft grinder relevant to above mentioned document US No. 2,937,479. Said apparatuses are limited to the grinding only. Similar technology is described in documents US No. 3,054,233 and US No. 3,103,088. Mentioned crankshaft grinders are similar to the previous patents, but now are applicable also to the crankshafts having no filets. In document SU1311911 is described a device for grinding connecting-rod journal of crankshaft inside engine. All above documents describe apparatuses for in-situ grinding of crankshaft journals.

There is also a document CN No. 101922006 describing process for repairing crankshaft of internal combustion engine by laser cladding or build-up laser technology. Said process refers to a repair of crankshafts which are taken out from the engine and does not proposes a technique for laser cladding of a crankshaft in situ.

After analysing said apparatuses and methods it was discovered that it is impossible to implement laser technologies. There is a need for a totally new approach to implement laser built up technologies in in-situ crankshaft journal repair apparatuses.

### Objective and summary of the invention

The aim of invention is to design an apparatus of and method of renovation and repair of crankshaft journal surfaces in-situ by means of laser build-up (cladding).

The invention is defined by an apparatus for repair and renovation of crankshaft journal surfaces as listed in claim 1. The apparatus comprising two guide-ways and two opposite-guide-ways for positioning said apparatus on crankshafts fillets and two frame parts where each frame part is fixed to respectively guide-way.

Additionally apparatus comprises at least two upper rods by means of which both frame parts are in fixed connection to each other, wherein the upper rods are position in the upper part of the frame part, and at least two lower rods by means of which both frame parts are in fixed connection to each other, wherein the lower rods are position in the lower part of the frame part. Apparatus further comprises two carriages which are installed on the upper rods and lower rods so that both carriages can be slidably moved along said rods. A laser nozzle is installed operatively between both carriages. Apparatus comprises two control motors, wherein a first control motor is installed in the first carriage and operatively connected to the laser nozzle to control its pivoting angle, and a second control motor is installed in the second carriage and operatively connected to the one of the two lower rods by means of a gearing transmission to control a longitudinal position of the laser nozzle.

The gearing transmission of the apparatus comprises a spur gear connected to the second control motor and a toothed rack, which is made directly onto the lower rod.

The first control motor is connected to the laser nozzle through a bush.

To ensure positioning and controlled rotation of the apparatuses around the crankshaft journal, it comprises two above described guide-ways and two opposite-guide-ways. Two supporting plates are permanently fixed on the opposite-guide-ways. Further, these supporting plates are connected to each other by at least two opposite-rods by means of which both opposite-guide-ways are in fixed connection to each other.

When installed on the crankshaft journal, guide-ways and opposite-guide-ways are connected and fixed to each other by means of four adjustable arms. Adjustable arms are connected with guide-ways and opposite-guide-ways by eight guidance-screws.

While crankshaft is being rotated around its main axe, the laser head top-down position is ensured by eight expandable-shrinkable elements (e.g. pneumatic cylinders). These eight expandable-shrinkable elements are connected with the guide-ways and opposite-guide-ways by the aforementioned eight guidance-screws. Expandable-shrinkable elements can freely rotate around these eight guidance-screws.

Further, said expandable-shrinkable elements are connected to the housing of the engine by means of four side-plates. These four side plates in turn are positioned and fixed on the engine housing opening hatches bolts. Additionally expandable-shrinkable elements are connected to the said side-plates by eight guidance-bolts. These expandable-shrinkable elements can freely rotate around these eight guidance-bolts.

The invention also describes a method for repair and renovation of crankshaft journal surfaces using above-mentioned apparatus, see claim 4.

The method includes the steps of:
a) positioning of said apparatus above a damaged (renewable) surface of the journal by means of said guide-ways and opposite-guide-ways;
b) applying a cladding powder onto the damaged surface of the journal;
c) positioning of a laser nozzle above the damaged surface of the journal by means of two control motors;
d) irradiation of the cladding powder by a laser beam emitted from the laser nozzle;
e) repeatedly performing steps b) through d) until the damaged surface of the journal is cladded.

In step c) a pivoting motion of the laser nozzle is performed by means of the first control motor and a longitudinal positioning of the laser nozzle is performed by means of the second control motor and its gearing transmission.

In accordance with the apparatus and method of this invention, the crankshaft does not need to be removed from the engine or motor block in order to repair or renovate the crankshaft journal surfaces.

### Brief description of drawings

The invention will be better understood in connection with the accompanying drawings, in which:
**FIG. 1** is an isometric view of an apparatus positioned on internal fillets of a crankshaft;
**FIG. 2** is an fragmentary view of a crankshaft showing crankshaft external fillets on which said apparatus is positioned by means of guide ways 2;
**FIG. 3** is the orthogonal projection of an apparatus positioned on a crankshaft;
**FIG. 4** is an isometric view of apparatus for in-situ laser build-up (cladding) positioned on a crankshaft;
**FIG. 5** is a cross-sectional view of an apparatus positioned on a crankshaft - upper part;
**FIG. 6** is a cross-sectional view of an apparatus positioned on a crankshaft; and
**FIG. 7** a cross-sectional view of an apparatus positioned on a crankshaft - lower part

### Detailed description of the invention

This invention is an apparatus and method for in-situ laser build-up (cladding) of the crankshaft crankpin journals.

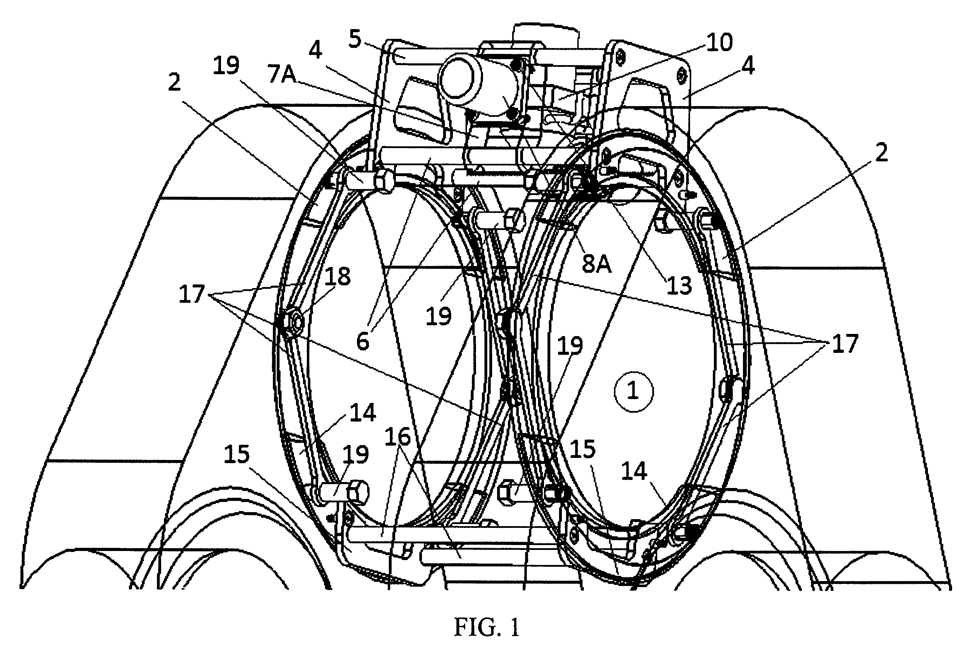

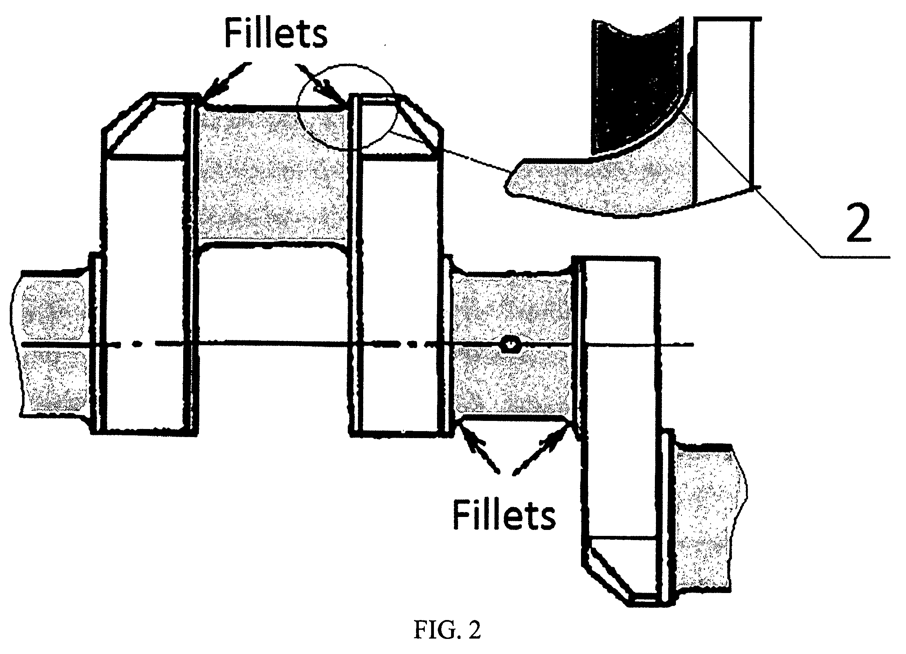

Invention is achieved by placing laser build-up (cladding) nozzle positioning and guidance apparatus directly on the crankshaft journal fillets. These fillets as a rule are not damaged or worn-out and thus holding the original manufacturers dimensions of the crankshaft. Therefore the internal fillets **(****FIG. 1****)** or external fillets **(****FIG. 2****)** can be used as a reference surface where position the laser cladding nozzle guidance platform, especially guide-ways **2** of the apparatus.

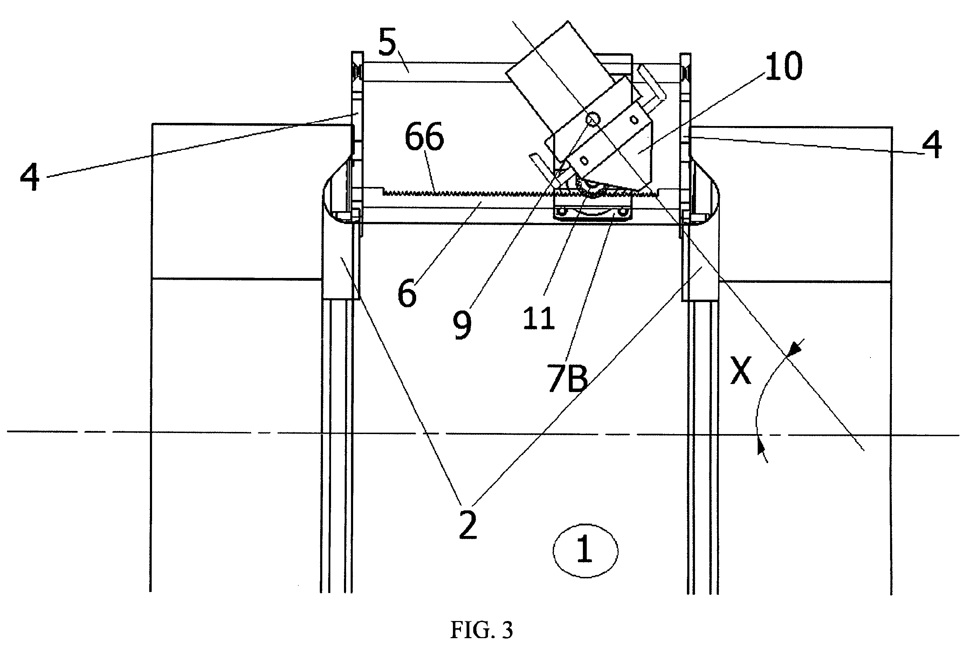

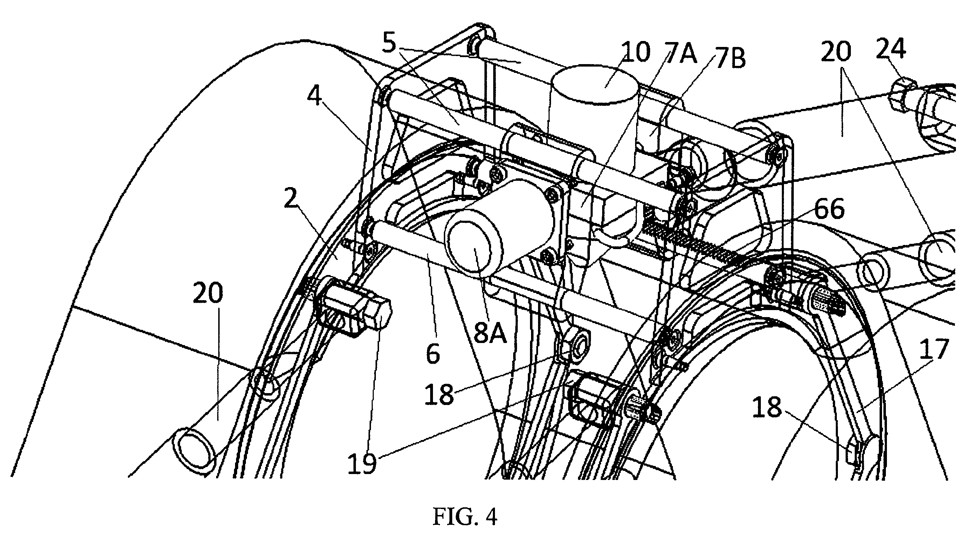

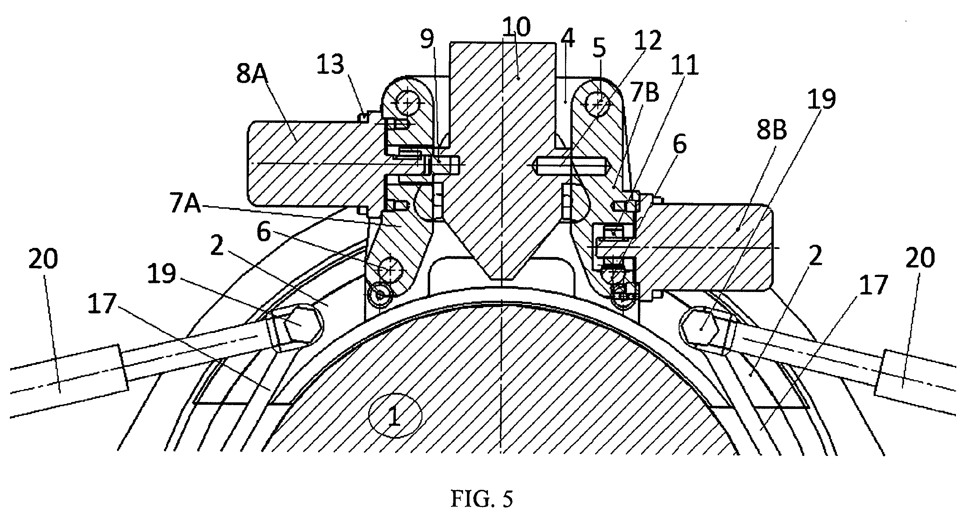

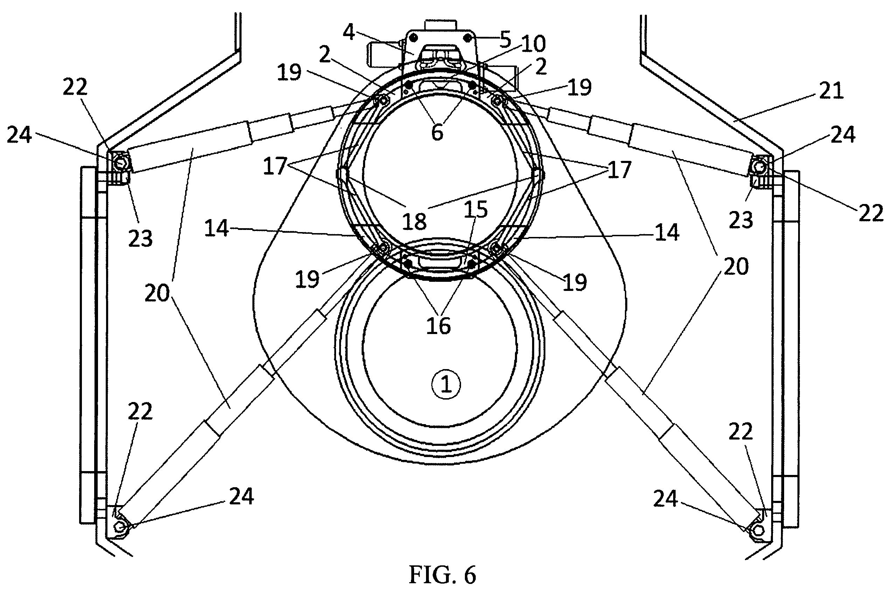

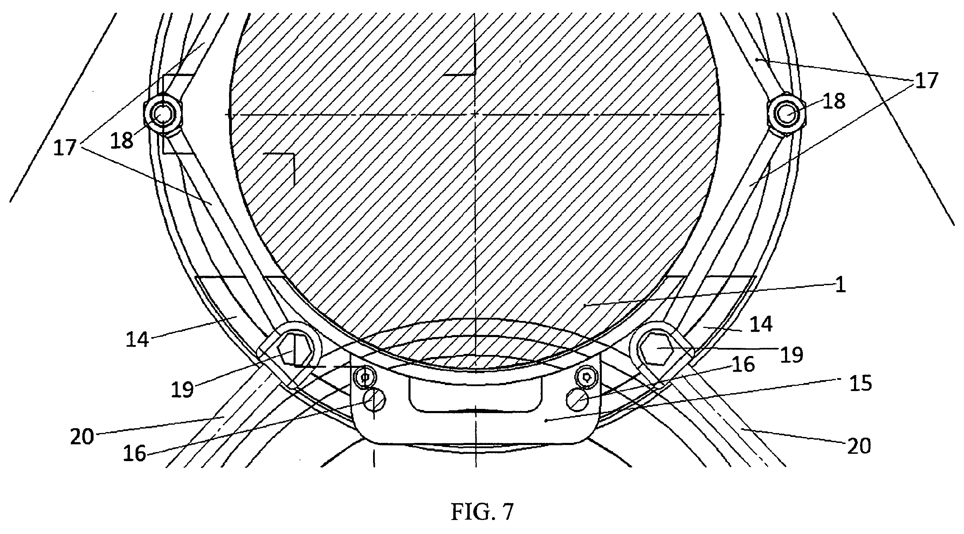

The apparatus **(****FIG. 3** **-** **FIG. 7****)** is mounted on the crankshaft crankpin **1** journal fillets by means of two sliding guide-ways **2** and two opposite-guide-ways **14.** Guide-ways **2** are provided with two frames **4,** which are each fixed with two screws (are not showed in the figures). Frames **4** are connected and fixed by means of rods **5** and **6.** On the rods **5** and **6** are mounted carriages **7A** and **7B** allowing longitudinal movement of the carriages **7A** and **7B.**

Opposite-guide-ways **14** are provided with two supporting plates **15,** which are each fixed with two screws (are not showed in the figures). Supporting plates **15** are connected and fixed by means of two opposite-rods **16.**

Guide-ways **2** and opposite-guide-ways **14** are placed on the crankshaft journal 1 fillets, and fixed to each other by means of four adjustable arms **17.** Angle of the adjustable arms **17** is fixed by the four screws **18.** Adjustable arms **17** are connected to the guide-ways **2** and opposite-guide-ways **14** by eight guidance-screws **19.**

Crankshaft **1** is being rotated around its main axe, the laser nozzle **10** top-down position is ensured by eight expandable-shrinkable elements **20** (e.g. pneumatic cylinders). These expandable-shrinkable elements **20** are connected with the guide-ways **2** and opposite-guide-ways **14** by the eight guidance-screws **19.** Expandable-shrinkable elements **20** are rotating around these eight guidance-screws **19.**

Expandable-shrinkable elements **20** are connected to the engine housing **21** with four side-plates **22.** These side plates **22** are positioned and fixed on the engine housing **21** service hatches openings bolts **23.** Expandable-shrinkable elements **20** are connected to the side-plates **22** by eight guidance-bolts **24.** The expandable-shrinkable elements **20** freely rotate around guidance-bolts **24.**

Longitudinal feed of the laser nozzle **10** towards crankshaft bearing surface **1** thereto achieved by means of transmission between spur gear **11** and feeding rod - toothed rack **66.** Spur gear **11** is fixed on the shaft of a second control motor **8B.** Positioning angle or pivoting angle **X** of the laser nozzle **10** towards the crankpin **1** surface is ensured by a first control motor **8A.** Laser nozzle **10** and the first control motor **8A** is connected through a bush **9.** Laser nozzle **10** is fixed rotatably in carriage **7A** by means of a pin **12.** Control motors **8A** and **8B** are secured to the carriages **7A** and **7B** by means of four fixation screws **13.**

During build-up (cladding) operation crankshaft itself is rotated in the engine by built-in means, conventionally by service-electrical motor. This motion is aligned with controlled movements of the control motors **8A** and **8B.**

The laser build-up (cladding) process includes a step of applying cladding powder or any other cladding material to the damaged surface of the journal. In the same time the cladding powder is irradiated by the high-energy laser beam. Thus a metallurgical bound between crankpin surface and substrate material is achieved by melting both cladding material and substrate. As a result worn-out or damaged surface is restored to its original configuration or to any other desired shape allowing for subsequent mechanical machining.

The following parameters (feeding elements) are synchronised and numerically controlled:
1. Positioning of the second control motor **8B** - guiding laser nozzle radial feed;
2. Positioning of the second control motor **8A** - guiding laser nozzle angle;
3. Crankshaft rotation frequency;
4. Laser power;
5. Feeding of welding powder.

Laser power lines are flexible as well as cladding powder supply pipes are flexible. They are deployed through piston liner from the top of the engine.

The present invention has been shown and described herein in what is considered to be the most practical and preferred embodiment. It is recognized, however, that departures may be made therefrom within the scope of the invention as defined in the appended claims.

### List of reference numerals:

- 1 -: a crankshaft;
- 2 -: a guide-way;
- 4 -: a frame part;
- 5 -: an upper rod;
- 6 -: a lower rod;
- 7A -: a first carriage;
- 7B -: a second carriage;
- 8A -: a first control motor;
- 8B -: a second control motor;
- 9 -: a bush;
- 10 -: a laser nozzle;
- 11 -: a spur gear;
- 12 -: a pin;
- 13 -: a fixation screw;
- 14 -: an opposite-guide-way;
- 15 -: a supporting plate;
- 16 -: an opposite-rod;
- 17 -: an adjustable arm;
- 18 -: a screw;
- 19 -: a guidance-screw;
- 20 -: an expandable-shrinkable element;
- 21 -: an engine housing;
- 22 -: a side plate;
- 23 -: a bolt;
- 24 -: a guidance-bolt;
- 66 -: a toothed rack;
- X -: a pivoting angle.

## Claims

1. Apparatus for repair and renovation of crankshaft journal surfaces, said apparatus comprising a laser nozzle (10), and **characterized by** the following features :
- two guide-ways (2) and two opposite-guide-ways (14) for positioning said apparatus on crankshafts (1) fillets;
- two frame parts (4) where each frame part (4) is fixed to respectively guide-way (2);
- at least two upper rods (5) by means of which both frame parts (4) are in fixed connection to each other, wherein the upper rods (5) are positionned in the upper part of the frame part (4);
- at least two lower rods (6) by means of which both frame parts (4) are in fixed connection to each other, wherein the lower rods (6) are positionned in the lower part of the frame part (4);
- two carriages (7A; 7B) which are installed on the upper rods (5) and the lower rods (6) so that the carriages (7A; 7B) can be slidably moved along said rods (5, 6);
- the laser nozzle (10) is installed on the carriages (7A; 7B);
- two control motors (8A; 8B), wherein a first control motor (8A) is installed in the first carriage (7A) and operatively connected to the laser nozzle (10) to control its pivoting angle (X), and a second control motor (8B) is installed in the second carriage (7B) and operatively connected to the one of the two lower rods (6) by means of a gearing transmission to control a longitudinal position of the laser nozzle (10);
two supporting plates (15) where each supporting plate (15) is fixed to respectively opposite-guide-way (14);
- at least two opposite-rods (16) by means of which both supporting plates (15) are in fixed connection to each other, wherein the opposite-rods (16) are position in the opposite-guide-ways (14);
- four adjustable arms (17) by means of which guide-ways (2) and opposite-guide-ways (14) are fixed slidably on the crankshaft journal fillets (1);
- at least four screws (18) by means of which angle and position of the adjustable arms (17) is fixed;
- at least eight guidance-screws (19) by means of which adjustable arms (17) are connected to the guide-ways (2) and opposite-guide-ways (14); and by means of which also eight expandable-shrinkable elements (20) are rotatably connected to the guide-ways (2) and opposite-guide-ways (14);
- at least eight expandable-shrinkable elements (20) by means of which laser nozzle (10) top-down centre position is ensured towards crankshaft fillet (1);
- at least four side plates (22), fixed on the engine housing (21) service hatches bolts (23), by means of which expandable-shrinkable elements (20) are connected to the engine housing (21);
- at least eight guidance-bolts (24) fixed to the side plates (22) allowing rotatable connection of the expandable-shrinkable elements (20).

2. Apparatus according to Claim 1, **characterized in that** the gearing transmission comprises a spur gear (11) connected to the second control motor (8B) and a toothed rack (66), which is made directly onto the lower rod (6).

3. Apparatus according to Claim 1, **characterized in that** the first control motor (8A) is connected to the laser nozzle (10) through a bush (9).

4. Method of repair and renovation of crankshaft journal surfaces using apparatus according to one or more of Claims 1-3, wherein said method includes the steps of:
a) positioning of said apparatus above a damaged surface of the journal by means of said guide-ways (2), opposite-guide-ways (14) and expandable-shrinkable elements (20);
b) rotation of the crankshaft (1) in the engine housing using service motor;
c) applying a cladding powder onto the damaged surface of the journal;
d) positioning of a laser nozzle (10) above the damaged surface of the journal by means of two control motors (8A; 8B);
e) irradiation of the cladding powder by a laser beam emitted from the laser nozzle (10);
f) repeatedly performing steps b) through e) until the damaged surface of the journal is cladded.

5. Method according to Claim 4, wherein in step c) a pivoting motion of the laser nozzle (10) is performed by means of the first control motor (8A) and a longitudinal positioning of the laser nozzle (10) is performed by means of the second control motor (8B) and its gearing transmission.

6. Method according to Claim 4, wherein top-down positioning of the laser nozzle (10) inside the engine housing is ensured by means of guide-ways (2), opposite-guide-ways (14) and expandable-shrinkable elements (20), ensuring constant cantering of the laser nozzle (10) towards upper centre of rotating crankshaft journal (1).

## Patentansprüche

1. Gerät zur Reparatur und Erneuerung der Kurbelwellenzapfen, dieses Gerät eine Laserdüse (10) umfasst und durch die folgenden Eigenschaften gekennzeichnet ist:
- zwei Führungen (2) und zwei entgegengesetzte Führungen (14), um das genannte Gerät auf Auskehlungen der Kurbelwellen (1) setzen zu können
- zwei Rahmenteile (4), wobei jedes Rahmenteil (4) an der entsprechenden Führung (2) befestigt ist;
- mindestens zwei obere Stangen (5), durch die beide Rahmenteile (4) sich in einer miteinander befestigten Verbindung befinden, wobei die oberen Stangen (5) im oberen Teil des Rahmenteils (4) angeordnet sind;
- mindestens zwei untere Stangen (6), durch die beide Rahmenteile (4) sich in einer miteinander befestigten Verbindung befinden, wobei die unteren Stangen (6) im unteren Teil des Rahmenteils (4) angeordnet sind;
- zwei Wagen (7A, 7B), die auf den oberen Stangen (5) und den unteren Stangen (6) befestigt sind, so dass die Wagen (7A, 7B) gleitend entlang dieser Stangen (5, 6) verschoben werden können;
- die Laserdüse (10), die auf den Wagen (7A, 7B) installiert ist;
- zwei Steuermotoren (8A; 8B), wobei der erste Steuermotor (8A) im ersten Wagen (7A) installiert ist und operativ mit der Laserdüse (10) verbunden ist, um deren Schwenkwinkel (X) zu steuern und ein zweiter Steuermotor (8B) im zweiten Wagen (7B) installiert ist und operativ über eine Getriebeübersetzung mit einer der beiden unteren Stangen (6) verbunden ist, um die Längsposition der Laserdüse (10) zu steuern;
- zwei Stützplatten (15), wobei jede Stützplatte (15) an der entsprechenden entgegengesetzten Führung (14) befestigt ist;
- mindestens zwei einander gegenüberliegende Stangen (16) durch die beide Stützplatten (15) sich in einer miteinander befestigten Verbindung befinden, wobei die gegenüberliegenden Stangen (16) in den gegenüberliegenden Führungen (14) angeordnet sind;
- vier einstellbare Arme (17), über die die Führungen (2) und die gegenüberliegenden Führungen (14) gleitend an den Kurbelwellenauskehlungen (1) befestigt sind;
- mindestens vier Schrauben (18), über die Winkel und Position der einstellbaren Arme (17) festgestellt werden;
- mindestens acht Führungsschrauben (19), über die die einstellbaren Arme (17) mit den Führungen (2) und den gegenüberliegenden Führungen (14) verbunden sind, und über die ebenfalls acht dehnbare/schrumpffähige Elemente (20) drehbar mit den Führungen (2) und gegenüberliegenden Führungen (14) verbunden sind;
- mindestens acht dehnbare/schrumpffähige Elemente (20), durch die die Mittelposition von oben nach unten der Laserdüse (10) hin zu den Kurbelwellenauskehlungen (1) gewährleistet ist;
- mindestens vier Seitenplatten (22), die an den Serviceklappebefestigungsbolzen (23) des Motorgehäuses (21) befestigt sind, über die die dehnbaren/ schrumpffähigen Elemente (20) mit dem Motorgehäuse (21) verbunden sind;
- mindestens acht Führungsschrauben (24), die an den Seitenplatten (22) befestigt sind und die eine drehbare Verbindung der dehnbaren/schrumpffähigen Elemente (20) ermöglichen.

2. Gerät gemäß Anspruch 1, **dadurch gekennzeichnet, dass** die Getriebeübersetzung ein Stirnradgetriebe (11), das mit dem zweiten Steuermotor (8B) verbunden ist, und eine Zahnstange (66), die direkt auf der unteren Stange (6) vorgesehen ist, umfasst.

3. Gerät gemäß Anspruch 1, **dadurch gekennzeichnet, dass** der zweite Steuermotor (8A) mit der Laserdüse (10) über eine Buchse (9) verbunden ist.

4. Verfahren zur Reparatur und Instandsetzung von Kurbelwellenzapfen unter Verwendung eines Gerätes gemäß einem oder mehreren der Ansprüche 1-3, wobei dieses Verfahren die folgenden Schritte umfasst:
a) Positionierung des genannten Gerätes oberhalb einer beschädigten Zapfenfläche mittels der genannten Führungen (2), gegenüberliegenden Führungen (14) und dehnbaren/schrumpffähigen Elementen (20);
b) Rotation der Kurbelwelle (1) im Motorgehäuse unter Verwendung eines Service-Motors;
c) Aufbringen eines Beschichtungspulvers auf die beschädigte Fläche des Zapfens;
d) Positionierung einer Laserdüse (10) über der beschädigten Fläche des Zapfens mit Hilfe der beiden Steuermotoren (8A; 8B),
e) Bestrahlung des Beschichtungspulvers mit einem Laserstrahl, der von der Laserdüse (10) ausgestrahlt wird;
f) wiederholte Ausführung der Schritte b) bis e), bis die beschädigte Fläche des Zapfens verkleidet ist.

5. Verfahren gemäß Anspruch 4, wobei im Schritt c) eine Schwenkbewegung der Laserdüse (10) mit Hilfe des ersten Steuermotors (8A) ausgeführt wird und eine Längspositionierung der Laserdüse (10) mittels des zweiten Steuermotors (8B) und seiner Getriebeübersetzung ausgeführt wird.

6. Verfahren gemäß Anspruch 4, wobei die Positionierung von oben nach unten der Laserdüse (10) innerhalb des Motorgehäuses über Führungen (2), gegenüberliegende Führungen (14) und dehnbare/schrumpffähige Elemente (20) gewährleistet ist, die eine konstante Bewegung der Laserdüse (10) in Richtung des oberen Zentrums des sich drehenden Kurbelwellenzapfens (1) gewährleisten.

## Revendications

1. Appareil pour la réparation et la rénovation de surfaces de tourillon de vilebrequin, ledit appareil comprenant une buse laser (10), et **caractérisé par** les particularités suivantes :
- deux voies de guidage (2) et deux voies de guidage opposées (14) pour positionner ledit appareil sur des congés de vilebrequins (1) ;
- deux parties de châssis (4) où chaque partie de châssis (4) est fixée respectivement à la voie de guidage (2) ;
- au moins deux tiges supérieures (5) au moyen desquelles les deux parties de châssis (4) sont dans une relation fixe l'une par rapport à l'autre, dans lesquelles les tiges supérieures (5) sont positionnées dans la partie supérieure de la partie de châssis (4) ;
- au moins deux tiges inférieures (6) au moyen desquelles les deux parties de châssis (4) sont dans une relation fixe l'une par rapport à l'autre, dans lesquelles les tiges inférieures (6) sont positionnées dans la partie inférieure de la partie de châssis (4) ;
- deux chariots (7A ; 7B) qui sont installés sur les tiges supérieures (5) et les tiges inférieures (6) de sorte que les chariots (7A ; 7B) peuvent être déplacés de manière coulissante le long desdites tiges (5, 6) ;
- la buse laser (10) est installée sur les chariots (7A ; 7B) ;
- deux moteurs de commande (8A ; 8B), dans lesquels un premier moteur de commande (8A) est installé dans le premier chariot (7A) et relié de manière opérationnelle à la buse laser (10) pour commander son angle de pivot (X), et un second moteur de commande (8B) est installé dans le second chariot (7B) et relié de manière opérationnelle à celle des deux tiges inférieures (6) au moyen d'une transmission par engrenages pour commander une position longitudinale de la buse laser (10) ;
- deux plaques de support (15) où chaque plaque de support (15) est fixée à respectivement une voie de guidage opposée (14) ;
- au moins deux tiges opposées (16) au moyen desquelles les deux plaques de support (15) sont dans une relation fixe l'une par rapport à l'autre, dans lesquelles les tiges opposées (16) sont positionnées dans les voies de guidage opposées (14) ;
- quatre bras réglables (17) au moyen desquels des voies de guidage (2) et des voies de guidage opposées (14) sont fixées de manière coulissante sur les congés de tourillon de vilebrequin (1) ;
- au moins quatre vis (18) au moyen desquelles l'angle et la position des bras réglables (17) sont fixés ;
- au moins huit vis de guidage (19) au moyen desquelles des bras réglables (17) sont reliés aux voies de guidage (2) et aux voies de guidage opposées (14) ; et au moyen desquelles également huit éléments extensibles-rétractables (20) sont reliés en rotation aux voies de guidage (2) et aux voies de guidage opposées (14) ;
- au moins huit éléments extensibles-rétractables (20) au moyen desquels la position centrale de haut en bas de buse laser (10) est assurée vers le congé de vilebrequin (1) ;
- au moins quatre plaques latérales (22), fixées sur les boulons d'écoutilles de service (23) de logement de moteur (21), au moyen desquels des éléments extensibles-rétractables (20) sont reliés au logement de moteur (21) ;
- au moins huit boulons de guidage (24) fixés aux plaques latérales (22) permettant une relation rotative des éléments extensibles-rétractables (20).

2. Appareil selon la revendication 1, **caractérisé en ce que** la transmission par engrenages comprend un engrenage cylindrique (11) relié au second moteur de commande (8B) et une crémaillère dentée (66), qui est fabriquée directement sur la tige inférieure (6).

3. Appareil selon la revendication 1, **caractérisé en ce que** le premier moteur de commande (8A) est relié à la buse laser (10) par l'intermédiaire d'un coussinet (9).

4. Procédé de réparation et de rénovation de surfaces de tourillon de vilebrequin utilisant un appareil selon une ou plusieurs des revendications 1 à 3, dans lequel ledit procédé inclut les étapes de :
a) positionnement dudit appareil au-dessus d'une surface endommagée du tourillon au moyen desdites voies de guidage (2), voies de guidage opposées (14) et éléments extensibles-rétractables (20) ;
b) rotation du vilebrequin (1) dans le logement de moteur en utilisant un moteur d'entretien ;
c) application d'une poudre de placage sur la surface endommagée du tourillon ;
d) positionnement d'une buse laser (10) au-dessus de la surface endommagée du tourillon au moyen de deux moteurs de commande (8A ; 8B) ;
e) irradiation de la poudre de placage par un faisceau laser émis à partir de la buse laser (10) ;
f) exécution à plusieurs reprises des étapes b) à e) jusqu'à ce que la surface endommagée du tourillon soit plaquée.

5. Procédé selon la revendication 4, dans lequel dans l'étape c) un mouvement pivotant de la buse laser (10) est effectué au moyen du premier moteur de commande (8A) et un positionnement longitudinal de la buse laser (10) est effectué au moyen du second moteur de commande (8B) et sa transmission par engrenages.

6. Procédé selon la revendication 4, dans lequel le positionnement de haut en bas de la buse laser (10) à l'intérieur du logement de moteur est assuré au moyen de voies de guidage (2), voies de guidage opposées (14) et éléments extensibles-rétractables (20), en assurant un chevauchement constant de la buse laser (10) vers le centre supérieur de tourillon de vilebrequin rotatif (1).
